(19) Europäisches Patentamt / European Patent Office / Office européen des brevets

(11) **EP 4 761 023 A1**

(12) **EUROPEAN PATENT APPLICATION**

(43) Date of publication:
**17.06.2026 Bulletin 2026/25**

(21) Application number: **24219507.1**

(22) Date of filing: **12.12.2024**

(51) International Patent Classification (IPC):
*H02G 1/02* (2006.01)

(52) Cooperative Patent Classification (CPC):
**G01P 5/02; G01M 9/08; H02G 1/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ampacimon SA**
**4431 Loncin (BE)**

(72) Inventor: **GODARD, Bertrand**
**4100 SERAING (BE)**

(74) Representative: **AWA Benelux**
**Parc d'affaires Zénobe Gramme - Bât. K**
**Square des Conduites d'Eau 1-2**
**4020 Liège (BE)**

(54) **A METHOD AND DEVICE BASED ON WIND-INDUCED MOTION RESPONSE FOR MONITORING WIND ACTING ON OVERHEAD POWER LINES**

(57)    The present invention relates to a method for estimating, measuring or monitoring a gust or wind speed component acting on a suspended cable span of an overhead electrical power line through the dynamic response from the wind-induced excitation, or aerodynamic force, upon said suspended cable span, comprising the following steps :
- sensing a tension, vibration, strain or motion of said suspended cable span by using a local or distributed sensing device having access to local, respectively distributed, estimates of said tension, vibration, strain or motion ;
- according the buffeting theory model, calculating the root mean square, or RMS, $\sigma^2$ of the suspended cable span dynamic response corresponding to said estimated local or distributed tension, vibration, strain or motion, said root mean square being obtained from the integral of the power spectral density, or PSD, $S_R(\omega)$ of said dynamic response, said RMS being obtained by signal frequency analysis :

$$\sigma^2 = \int S_R(\omega)d\omega;$$

- and calculating the PSD of the gust or wind speed component, $S_{wind}(\omega)$, as a function of the PSD of said dynamic response, $S_R(\omega)$.

FIG. 2

**Description**

**Field of the Invention**

The present invention relates to electrical power engineering and distribution and more specifically to a method for estimating, measuring or monitoring wind acting on a suspended cable span of an overhead electrical power line through the response from the wind-induced excitation.

The invention also relates to a device or system for carrying out the above-mentioned method.

**Background and Prior Art**

The electricity sector and utilities are today facing major changes in the way the grid must be exploited. Electrical flows have increased considerably and have become more complex, variable and volatile, difficult to predict and to control in recent times. It becomes critical when dealing with existing transport and distribution resources to be fully exploited. As a result of the increased and changing power flows, some lines can be close to their traditionally static or seasonal rating limit based on very conservative weather conditions, designed decades ago for more stable, directional well-known flows.

The increasing power transmission capacity through thermal ratings is currently of great interest in electricity industry. Static ratings are challenged as being overly conservative due to load growth. Thus the static rating is a conservative value that often leads to security margins higher than needed. To obtain a more efficient use of transmission lines, by reducing the existing margins while keeping a safe level of exploitation of the grid, it is necessary to know in real time the exact capacity of the lines. Consequently, utilities are looking at alternative approaches to up-rate the load capacity (ampacity), rating for the existing transmission lines. Dynamic Line Rating (DLR) is a measure to increase the capacity (ampacity) of overhead lines depending on the real-time weather situation, i.e. not on preset conservative weather conditions.

As explained in document WO 2014/090416 A1, the difficulty in the past to take into account the influence of wind speed led to set a design minimum wind speed around 0.6 m/s (IEEE standard 2006, Cigre 2006). Then transmission power has been traditionally limited by a conductor thermal capacity defined in terms of Static Rating (SR), based on a predetermined set of worst-case weather scenarios with high reliability level. As an example, typical worst case is defined with simultaneous (i) conservative minimum perpendicular wind speed of about 0.5-0.6 [m/s], (ii) conservative high solar radiation of about 1000 [W/m$^2$] and (iii) conservative high ambient temperature defined according to the season. Using these assumed weather conditions greatly leads to underutilizing the line, since the actual line rating can be much higher than the worst-case assumed rating. The wind speed is a dominant variable for many power lines design aspects. Its determination at conductor level is a headache as spans may be very long and conductor position in space variable (due to sag and difference in height between ends). Wind actions may be hardly estimated properly depending on the design concerned aspect.

The evaluation of the rating is mainly depending on conductor properties, span properties and weather conditions (mainly wind, ambient temperature and solar radiation ; others like rain are most of the time neglected). Indirect methods such as weather stations based or weather models rely on monitoring e.g. ambient weather, and based on those methods the line temperature and sag are determined indirectly by theoretical models and calculations. This will have additional risk that must be taken into account. These indirect techniques work well if the system behaves exactly in accordance with the mathematical models. However, real world systems are not as ideal as the models used to describe them. Direct methods are related to sensing devices attached on the line like devices including accelerometer, displacement sensor, etc., installed at some location along the line or distributed sensing devices like optic fiber installed inside the suspended conductor or attached to it.

As explained in document WO 2016/102443 A1, the issue with this method is that weather parameters and wind in particular vary significantly with space. Due to the local topology, the turbulence, the boundary layer effect, thermal effects, clouds, etc. the wind speed and direction will vary significantly over the distance of a span and section. As it is the global wind as sensed by the conductor that determines its thermal equilibrium, punctual measurements of the weather and in particular the wind variables even taken in close proximity to the line remain inaccurate. Only the ambient air temperature is generally sufficiently homogenous to allow a point measurement to be meaningful for a whole span or section. Moreover, weather stations near the line would have to catch local effect for the power line, which would need installation at the conductor level. The only practical way is to install them on towers where energy would be needed for data storage and remote transmission, adding complexity in managing the readings, or in installing the sensing devices.

As a consequence, getting the wind speed at conductor level along the line route or at particular locations is of prime interested for the utilities.

Smart sensing devices are increasingly equipping power lines. Their main application is linked to DLR ("Guide for application of direct real-time monitoring systems", CIGRE Technical brochure No. 498, Study Committee B2, 2012). However most of them are directly related to sag or clearance and have no access to wind.

U.S. Pat. Nos. 5,140,257 and 5,341,088 disclose a monitoring device whose housing is attached to the conductor. Some features of this device are related to the measurement of wind speed and direction based on hot wire anemometers. However, hot wire anemometers are extremely difficult to manage in such close proximity to a high-voltage power line. Moreover, the measured wind speed may be altered by the sensor itself, since the hot wire needs to be protected against corona discharges.

U.S. Pat. Nos. 6,441,603 and 5,559,430 disclose a monitoring device for rating an overhead power line, which is not attached to the conductive cable of the power line, but replicates it instead. The evaluation of the combined effect of wind, solar radiation, albedo, and ambient temperature is based on the behaviour of dedicated rods installed separately from the conductive cable. The drawback of such a local replication, however, is that the variations in wind speed and effective incident radiation along the span are not taken into account.

Consequently, such a local measurement may not be a good indication of the actual mean wind speed and global incident radiation along spans of several hundreds of meters with possibly variable heights and variable winds along the span. Moreover, using a replica may cause additional errors with respect to the mean values of conductor emissivity and absorptivity and global incident radiation along the whole span of suspended conductive cable.

PCT Patent Application WO 2010/054072 A1 is related to real time power line rating. It alleges the existence of a sensor about wind speed direction and amplitude but did not disclose how these sensors are constituted.

PCT Patent Application WO 2004/038891 A2 and Norwegian Patent Application NO 20024833 disclose a monitoring device whose housing is attached to a suspended cable. The wind is measured by "a traditional wind gauge" and such wind gauge "operates with an opening in the outer casing". However, a drawback of traditional wind gauges is that the gauge itself constitutes a perturbation in the local measurement and low wind speeds cannot be measured properly by such a gauge.

US Patent Application US 2012/0029871 A1 discloses a monitoring device whose housing is attached to the conductor. However, this document does not disclose how to evaluate the wind speed to consider for ampacity determination. On the website http://www.lindsey-usa.com/newProduct.php, it is stated that the sensors in such a monitoring device may be tasked to detect "galloping" and Aeolian vibration, which is an indication of wind blowing across the suspended cable.

Document WO 2014/090416 is describing a method and device that determine perpendicular wind speed acting on overhead lines through motion of overhead lines measured by accelerometer. The measured motion spectrum is used first to identify Aeolian vibrations. Secondly, if Aeolian vibration does not exist, wind is obtained from swing-angle induced by the wind. The parameters of the swing-angle based wind formula are obtained by matching both wind related motions when they exist at the same time. The frequency content of the motion is only used to detect Aeolian vibration. Swing-angle based wind is obtained through mean value from accelerometers readings, using gravity as a reference direction.

The drawbacks of this method is that motion of the sensor attached to the conductor due to the continuous vibration / movement of the conductor due to the wind may led to very complex and difficult estimation of the angle from accelerometer readings. The underlying assumption in inclination sensing with an accelerometer is that the only acceleration stimulus is that associated with gravity. However, during movement, additional acceleration stimulus is added to gravity and signal processing on the signal output must be implemented to remove rotational acceleration or high frequency content for example. Another limitation of the method and device described in the aforementioned patent is the possible need of highly accurate temperature-related calibration of accelerometer readings. Swing angle is small for low or moderate wind speed. Then transversal axis readings are close to 0 (0 being the case at rest, no wind when transversal axis is in a plane perpendicular to gravity). It means that the readings are often close to the offset of the accelerometer readings and uncertainty on offset estimation may lead to high uncertainty on the transversal readings. The vertical is less sensitive to this phenomena because it is parallel to gravity, sensing high value faraway from the offset (0 readings). At rest, vertical axis is measuring gravity. It is noted here that dynamic part of the readings, i.e. the spectrum content, is only used for detecting the Aeolian vibration.

Distributed optic fibre based monitoring like distributed acoustic sensing (DAS) or distributed optic fibre temperature sensing (DTS) solutions have significantly improved their accuracy over the last decades. They are now used in multiple applications like power cable monitoring, fire detection, pipeline monitoring, rail monitoring, etc. Light pulse(s) are emitted and are travelling through an optic fibre and reflection can be accurately measured by one acquisition unit located at one end of the optic fibre which is sensitive to strain in any form, that is from bending, stretching or temperature change. Distributed temperature sensing stimulus response distribution over the length of an optical fibre cable is using the fibre itself as the sensing element. The reflection of the light pulse is related to the global response of the optic fibre due to any stimulus (temperature change, motion like vibration) that induces a (local) strain and then a change of length of the fibre. Thanks to the constant light speed, the estimation of time of flight gives access to the change of length and then the global response due to any stimulus. The link of the output readings to the initial stimulus (that can be unique or not) may be complex as the global response is read.

Fibre optic sensor technologies have founded growing application in the area of monitoring civil structures in the past decades and the optic fibre based technology provider has now moved to applications for the energy sector. Optic fibre based technology are passive ones (emission and acquisition unit at the ends, located at a substation for example) with no need of installation of extra sensor along the line route. Optic fibre sensing is already installed in optic ground wire (OPGW) for most of the overhead lines. Optic fibre can be inserted in the phase conductor of new generation. Optic fibre can be wrapped around the power cable using special installation equipment. Optical fibre sensing technology is a technology that enables for example real-time measurement of how optical fibre cables vibrate by inputting laser pulse light into optical fibre cables for communications and measuring changes and components of light such as backscattered light.

Distributed temperature sensing (DTS) with optic ground wire (OPGW) of the transmission line spatially and temporally resolve temperature measurement that reflects both the ambient temperature and solar heating because there is no current flowing through the OPGW. OPGW is a facility in which an optical fiber cable is built into an overhead ground wire to protect lines from lightning. Then, this does not give the full picture for monitoring accurately the line rating and this is useless for monitoring overhead lines in real time because the earth wire is not influenced by current in the phase conductor that has a direct influence on the rating. Further there is no information on the wind. Distributed optic fibre method may also have access to other values that temperature because they are measuring the response due to any stimulus.

As a first example, it is detailed in "L. BJERKAN et al, Measurements on an Aeolian vibrations on a 3 Km fjord crossing with fibre-optic bragg grating sensors, CIGRE 2004, B2-314" and "Leif Bjerkan, Application of fibre optic Bragg grating sensors, monitoring environmental loads of overhead power transmission lines, Applied Optics Vol. 39, No. 4, 554-560, Feb. 2000", that such a fibre optic Bragg (FBG) measurement is able to estimate vibration of overhead lines. The existing drawback of this method is that most of the time fibre optic is not available in existing overhead conductors and its installation is difficult, as the fibre optic cable must be fixed to one strand of the conductor or wrapped along the whole span with a specific machine and caution should be addressed in case of existing fittings on the line. Finally the instrumentation must be directly connected to a computer, at the end of the section for example, for data acquisition and analysis.

As an second example, as explained in "Canudo J., Sevillano P., Overhead Transmission Line Sag Monitoring Using a Chirped-Pulse Phase-Sensitive OTDR, IEEE Sensors Journal, 2023, Vol. 24, Issue: 2, 15 January 2024, pp. 1988-1995", the sag of a suspended conductor can be obtained through frequency analysis of the response of the suspended cable. Once the frequency spectrum of the stimulated optic fibre response is obtained, frequency analysis is then applied to get the sag. The frequency analysis way of getting the sag from frequency spectrum as explained in patent US 8 184 015 B2 is obtained from frequency analysis of the response of the suspended conductor. The main difference comes here from the way the response of the suspended cable motion is obtained. From the above-mentioned original paper, this is obtained through optic fibre monitoring, while this is obtained from accelerometer based readings in US 8 184 015 B2. The original paper is discussing sag analysis of the earth wire. Again this is useless for monitoring overhead lines in real-time because the earth wire is not influenced by current in the phase conductor that has a direct influence on the rating. The current is heating the phase conductor and then influences the clearance or temperature reserve that is available over time. It could be seen as a preliminary analysis of the capability of optic fibre readings in that field, as the method would be useful in case of optic fibre installed inside the phase conductor. However, this paper is not related to wind measurement along the line route, i.e. wind at phase conductor location or at earth wire location.

As another example, from "Himanshi Singh et al., Extended Characterization of an Optical Sag Sensor for High-Temperature Low-Sag Lines, IEEE Sensors Letters, 2023, Vol. 7, Issue number 9, pp. 1-4" and from "Grzegorz Fusiek et al., Design of an optical sensor with varied sensitivities for overhead line sag, temperature and vibration monitoring, 2022 IEEE International Instrumentation and Measurement Technology Conference (I2MTC), Ottawa, ON, Canada, 16-19 May 2022", a strain sensor connected to optic fibre can be used for monitoring sag and temperature of high-temperature low sag (HTLS) overhead lines conductors. The paper does not present distributed sensing and there is no information about wind estimation which does not give the complete solution for monitoring dynamic line rating.

As still another example, as explained in "Skrovanek D. et al., Application of fibre-optics to FERC Order 881 on ambient-adjusted ratings (AAR) and dynamic line ratings (DLR), 2024 IEEE PES T&D Conference, Anaheim, CA", OPGW temperature may be easily obtained from optic fibre sensing and it is possible to integrate specially designed fibre optic anemometers with the OPGW. Additional local anemometers are installed to some towers and connected to the optic fibre and data are retrieved through the optic fibre. Wind is not obtained through the optic fibre response to the wind stimulus here. Wind is measured through anemometer connected to the fibre. Document WO 2021/207093 A1 describes such a distributed fibre optic sensing system for wind speed measurement. However the wind is obtained thanks to the fibre pinwheels attached to the utility poles. However the wind is not obtained from the response of the distributed sensing system itself. It is noted here that the loads due to the effect of wind acting on the conductors, which in turn transmit loads to the supporting tower, are greater than the loads due to the wind acting directly on the tower itself. It is then more important to get the vibration response of the conductor than the one from the tower.

As still another example, as explained for example in "Chadi Sayde et al., High-resolution wind speed measurements using actively heated fibre optics, Geophysical Research Letters, vol. 42, issue 22, 2015, pp. 10064-10073", and in "Van Ramshorst et al., 2019, Wind speed measurements using distributed fibre optics: a wind tunnel study, Atmospheric Measurement Techniques Discussions (2019), pp. 1-21", wind speed can be obtained from temperature differences between paired passive and actively heated fibre-optic cables with a distributed temperature sensing system. The underlying is like hot wire anemometer method. The wind speed is not obtained from the fibre itself. It is obtained from comparison of multiple readings. This method cannot be directly applied to overhead phase conductor because the phase conductor temperature is varying over time due to current and there is no controlled heating or there is no unheated reference value. This would be available in case of combining optic fibre readings installed on ground wire that is not heated by Joule effect and optic fibre readings installed on phase conductor that is heated by Joule effect, ground wire and phase conductor being both heated by the sun and ambient temperature. However the comparison may be difficult as the ground wire and phase conductor may have different properties.

As still another example, from "Freundorfer A. et al., Distributed sensing of wind direction using fibre-optic cables, Journal of Atmospheric and Oceanic Technology, Volume 38: Issue 10, 2021, 1871-1883", distributed optic fibre is focused on spatially heterogenous processes in the atmosphere and the wind direction. They are using pairs of actively heated fibre-optic cables with cone-shaped mircrostructures attached to them. As in previous example, this method is based on combining with a heated part that cannot be easily applied to overhead lines. Moreover, here additional cone-shaped structure are installed on the optic fibre. For overhead lines, wind direction is the not the main parameter to be known, while wind speed is the dominant factor.

As still another example, from "Guanhua Zhi, Haiting Di, Wind speed monitoring system based on optical fibre curvature sensor, Optic Fiber Technology, 2021, 62(6):102467", wind speed is obtained from fibre curvature sensor. The wind speeds is converted into a bending of a cantilever beam on which the optic fibre is fixed on. The mechanical structure of monitoring system converts the wind speed into the periodic bending of a cantilever beam. In this way, the wind speed is measured by monitoring the frequency of the periodic signal of the fibre sensor. Then wind is obtained through frequency of the sensor output, vibration of the beam being induced by rotating a mechanical part that rotates due to the wind. The optic fibre response is not directly excited by the wind. It is excited through the rotating part.

Optic fibre based Dynamic Line Rating (DLR) is common nowadays and there is a lot of companies that provide such optic-sensing system worldwide.

A particular optic fibre provider (see https://www.prismaphotonics.com/our-technology/ accessed latest 26th August 2024) is using optic fibre for DLR application. From the aforementioned reference, one cannot know either how optic-readings are converted to wind. Disclosed information is limited to the following, "Measuring Wind on Every Span. Not depending on sensors installed on wires or towers PrismaCapacity measures wind metrics on every line span between any two towers. Scale matters and PrismaCapacity is the only Distributed DLR monitoring solution that pin-points the bottleneck span all along the line and scales up to grid sizes. This method accounts for the varying geographies and topologies power lines traverse, which can significantly impact wind cooling effectiveness".

Another particular optic fiber provider (see https://www.fujitsu.com/global/about/resources/news/press-releases/2022/1012-01.html, accessed 2022 October 3rd) is using optic fiber readings to measure data vibration of optical ground wire (OPGW). The vibration readings are then converted to estimate wind conditions for drone operation support and Dynamic Line Rating applications. From aforementioned reference, one cannot know either how optic-fiber readings are converted to wind.

Document WO 2023/238348 A1 discloses a power line operation assistance device that assists with operation of a power line constructed on a power transmission tower together with an optical fibre composite overhead line, the power line operation assistance device comprising: a weather data acquisition unit that acquires prescribed types of weather data including air temperature, wind conditions, and insolation at a prescribed position on the power line; a current value acquisition unit that acquires a current value flowing through the prescribed position on the power line; and a first temperature calculation unit that inputs the weather data and the current value at the prescribed position to a first relational expression representing the relationship between the current value, temperature, wind conditions, and insolation of the power line and the temperature of the power line, thereby calculating the temperature of the power line at the prescribed position. The weather data acquisition unit acquires wind conditions calculated on the basis of a result of measuring a vibration state of the optical fibre composite overhead line, which is measured using a distributed multipoint vibration measurement method, as the wind conditions at the prescribed position.

The wind condition information providing device uses an optical fibre of an OPGW installed on a power transmission as a sensor, and measures wind conditions at multiple points along the optical fibre. Distributed Acoustic Sensing (DAS) is the technique used for measuring the vibration state (vibration strength, vibration frequency) due to the expansion and contraction of the optical fibre to obtain wind conditions (wind direction, wind speed) at each measurement point based on the vibration state at each measurement point. The DAS acquires the vibration state at each measurement point, for example, based on the principle of a coherent detection optical time domain reflectometer (C-OTDR).

Distributed Acoustic Sensing (DAS) is a method transforming standard fibre optic cables into arrays of highly sensitive vibration sensors by detecting small strain or pressure changes along the cable.

Here are the following steps for estimating wind conditions from fibre optic readings :

- Distributed sensing setup: the fibre optic cable is deployed in areas where wind conditions are to be monitored. DAS interrogators are used to send light pulses into the fibre and analyse the backscattered light (Rayleigh scattering) as it travels along the cable. Changes in the backscatter pattern indicate local strain, vibration, or disturbances caused by environmental factors like wind ;

- Vibration detection: wind creates turbulence and fluctuating pressure patterns, which result in surface vibrations on structures (poles, towers, cables, or directly on the fibre if exposed). These vibrations alter the strain profile of the optical fibre, and DAS sensors can detect these minute changes ;

- Signal processing:

   ◦ the raw signal from the DAS system reflects the frequency and amplitude of vibrations along different segments of the fibre ;

   ◦ advanced signal processing algorithms are used to filter out noise and extract meaningful vibration data related to wind speed and turbulence ;

   ◦ machine learning techniques can be trained on known wind conditions to correlate vibration patterns with wind speed, direction, and gustiness.

- Correlation with wind parameters:

   ◦ wind speed: the magnitude of the vibrations generally increases with wind speed. Higher wind speeds induce stronger pressure fluctuations and larger strain on the cable ;

   ◦ wind direction: the fiber's layout (e.g. horizontal along a bridge or vertically along a wind turbine) can be used to infer wind direction by analyzing how vibrations change across different segments of the cable ;

   ◦ turbulence and gusts: irregular, high-frequency vibration patterns can indicate turbulent winds or gusts.

- Calibration:

   ◦ the fibre optic system may have to be calibrated with traditional wind measurement devices like anemometers or LIDAR to build a reference model; over time, this reference data can improve the accuracy of the DAS system, allowing for real-time estimation of wind conditions solely from the optical fibre readings ;

   ◦ this calibration using such external device may add difficulties in the process like installation of those stations on multiple spans, at conductor level, on tower, managing the power supply and the communication of data of those weather stations, etc. ;

   ◦ however, the readings of the DAS system may be used for self-calibration (i.e. using the readings from conductor only with no need of external reference wind values). It is well-known in the literature that Aeolian vibration of a conductor is directly linked to the wind speed and conductor diameter as given by the Strouhal relationship $Str = f*d/u$ where $Str$ [-] is the dimensionless Strouhal number which a good value is 0.185 [-] for overhead lines applications, $f$[Hz] is the frequency of vibration and $d$[m] is the conductor diameter. During that specific vibration pattern (i.e. Aeolian vibration), a good reference wind value may be estimated from the readings and the frequency content. Then, this reference value can be used for calibrating the sensing device readings with no need of external wind measurements.

As optic fibre sensors give access to response to stimulus, either static or dynamic, it is obvious that the sensing device readings can theoretically be used to calculate / estimate metrics related to the stimulus from the wind because the optic fibre is sensitive to strains of any kind.

Wind is not only containing a mean component (or static part) but also a randomly fluctuating gust (or dynamic part). These gusts cause fluctuating dynamic response of structures like conductors, towers, bridges, etc. Buffeting is the forced vibration of the structure under the excitation of the fluctuating wind. Buffeting theory is well-known in civil engineering structures because the buffeting response of the structure potentially influences the serviceability. As an example, a too high lateral displacement during buffeting may force authority to close suspension bridges. In another example, lateral movement of overhead lines or towers may induce the asset to come too close from obstacles, creating arcing . The importance of the dynamic response of structure under wind loading is also first studied when designing outdoor structures. Lateral displacement of towers or lateral displacement of the deck of bridges is often analysed using buffeting theory.

As for example, from "Etienne Cheynet et al., Wind-induced response of a bridge at the inlet of a fjord, Wind Engineering society, 11th Biennal Conference, 8-10 September 2014, Birmingham, United Kingdom", the wind-induced response of a suspension bridge is studied and buffeting theory result is compared to experimental measurements. Root mean square of lateral movement obtained from analytical buffeting theory is compared to experimental results. It is shown that the theoretical analytical calculations are well correlated to experimental values and it is shown that normalized (to turbulence intensity) root mean square lateral movement is given as a power function of wind speed, i.e. the normalized root mean square rms of the lateral displacement is related to wind speed thanks to an equation like $rms = aU^n$ where $U$ [m/s] is the wind speed, $n$ [-] being a power exponent and a being a coefficient obtained when fitting the experimental data. The experimental data are obtained from measured wind speed from anemometers and accelerometers installed on the bridge decks. Thus the wind speed is not obtained from the vibration of the bridge itself. The paper is a proof that buffeting theory is well defined for studying wind-induced response of bridges and structures. Moreover, the study is focused on wind speed values above 5 [m/s]. Unfortunately, that range if not of prime interest for Dynamic Line Rating application. Low wind speed, i.e. less than of about 3 [m/s], is the wind speed range that is very critical for dynamic line rating. However, the wind-induced response for higher ranges of wind speed is also useful in practice for other applications like design of overhead lines. At design stage, buffeting is studied and lateral movement is obtained from finite element method for example. Then maximum design is fixed and damping is added to the structure or the structure design is updated to meet the design standards criteriae.

As an second example of lateral movement it is shown in "Fenerci et al., Measured Buffeting Response of a Long-Span Suspension Bridge Compared with Numerical Predictions Based on Design Wind Spectra, J. Struct. Eng., 2017, 143(9)", that root mean square of lateral and vertical acceleration response and wind speed are related to each other through a polynomial function. Wind is here obtained from a classical anemometer. It is also shown that root mean square of lateral displacement is increasing with wind speed. However, there is no direct relationship of root mean square response to wind.

As a third example, from "Sehoon Kim et al., In-Situ Data-Driven Buffeting Response Analysis of a Cable-Stayed Bridge, Sensors 2019,19, 3048", root mean square of buffeting response at some location along the bridge is given and then correlated to wind speed through buffeting theory with a polynomial function which is the consequence of the response of the structure to the wind fluctuation. Wind speed range under 5 [m/s] is available, i.e. range of wind speed that is of prime interest for dynamic line rating of overhead lines. However, the direct link is not detailed and wind speed is obtained from an anemometer. Wind speed is thus nor obtained from the response of the structure at all, nor for real time application.

As overhead lines are also subject to wind forces, buffeting was also studied for overhead lines. As an example, from "Hung et al., Extensive analyses on large amplitude gusty-wind induced vibrations of overhead transmission lines systems, Research Report of Department of Civil and Environmental Engineering, Saitama Univ., Vol.40, 2014", dynamic response at some location is correlated to wind measurements. However, wind speed is not directly obtained from the dynamic response of the overhead line conductor. In another example, from "Aeroleslastic wind tunnel testing on the wind-induced dynamic reaction response of transmission lines, J. Aerosp. Eng., 2021, 34(1) : 04020105", theory is pretty well detailed. However this is not related to wind estimation from the dynamic response of the overhead conductor. In still another example, from "Dahai Wang et al., Analytical Model for Dynamic Tension in Overhead Power Transmission Lines Subject to Strong Wind, Advances in Structural Engineering, Volume 14, No. 3, 2011", buffeting theory is applied to dynamic tension that is a direct image of the strain through Hooke's law $H = EA\varepsilon$ where H [N] is the tension that can be assumed constant over a suspended conductor span, E [N/m^2] is the Young modulus, $A$ [m^2] is the section of the conductor and $\varepsilon$ [m/m] is the elongation that is an image of the strain that can be measured by optic fibre. Buffeting theory is applied to dynamic tension. The aforementioned references are related to buffeting theory and they are not related to a method estimating the wind from buffeting response of any structure like overhead conductor.

## Aims of the Invention

As overhead lines are greatly underutilized because they are exploited using conservative assumptions on weather conditions nowadays, there is a need to provide a suitable system for real-time and on-site monitoring of the Dynamic Line Rating and a need for suitable wind monitoring because the wind is a dominant variable for safe monitoring dynamic line rating.

The present invention thus aims at providing both on-line direct local or distributed measure/monitoring of wind speed acting on overhead power lines in a number of applications.

The invention aims in particular at providing a method for monitoring the transmission and distribution network since wind speed is the weather-related dominant factor for Dynamic Line Rating and since wind-induced mechanical-dynamical phenomena experienced on overhead lines can lead to mechanical damages of the conductors as a result of material fatigue, mechanical damages of the insulators, armatures and towers and therefore power outages and/or failure.

## Summary of the Invention

A first aspect of the present invention relates to a method for estimating, measuring or monitoring a gust or wind speed component acting on a suspended cable span of an overhead electrical power line through the dynamic response from the wind-induced excitation, or aerodynamic force, upon said suspended cable span, comprising the following steps :

- sensing a tension, vibration, strain or motion of said suspended cable span by using a local or distributed sensing device having access to local, respectively distributed, estimates of said tension, vibration, strain or motion ;

- according to the buffeting theory model, calculating the root mean square, or RMS, $\sigma^2$ of the suspended cable span dynamic response corresponding to said estimated local or distributed tension, vibration, strain or motion, said root mean square being obtained from the integral of the power spectral density, or PSD, $S_R(\omega)$ of said dynamic response, said RMS being obtained by signal frequency analysis :

$$\sigma^2 = \int S_R(\omega)d\omega \; ;$$

and calculating the PSD of the gust or wind speed component, $S_{wind}(\omega)$, as a function of the PSD of said dynamic response, $S_R(\omega)$.

According to preferred embodiments, the method additionally comprises at least one of the following steps or a suitable combination thereof:

- the sensing step is performed with a sensing device comprises a local sensing device such as a strain gauge, an accelerometer, an IMU or combination of accelerometer and gyroscope, a load cell, an inclinometer or a laser doppler vibrometer, or a distributed sensing device, such as a device carrying out Distributed Acoustic Sensing or DAS, Fiber Bragg Grating or FBG, Distributed Strain Sensing or DSS, Coherent Detection Optical Time Domain Reflectometer or C-OTDR, or Brillouin Optical Time Domain Analysis or BOTDA ;
- said spectral density $S_R(\omega)$ is taken equal to the product of the fluctuating force spectral density $S_F(\omega)$) by the mechanical admittance function $|H(\omega)|^2$, or

$$S_R(\omega) = S_F(\omega)|H(\omega)|^2 \propto S_{wind}(\omega)|\chi_a(\omega)|^2|H(\omega)|^2,$$

where $S_{wind}(\omega)$ is the wind PSD and $|\chi_a(\omega)|^2$ is the aerodynamic admittance given in first approximation by $|\chi_a(\omega)|^2 = 1$ ;
- the fluctuating force spectral density $S_F(\omega)$) is related to the wind PSD $S_{wind}(\omega)$ in first approximation by the formula :

$$S_F(\omega) = \frac{4F^2}{V^2} S_{wind}(\omega)$$

where F is the mean force given by $F = \frac{1}{2}\rho V^2 Cf A$, $\rho$ [kg/m^3] being the fluid density, which is air density, Cf [-] is the force coefficient, V [m/s] is the mean wind speed and $A$ [m^2] is the area of exposure ;
- for one single degree of freedom, the mechanical admittance is taken equal to :

$$|H(\omega)|^2 = \frac{1}{k^2}\frac{1}{\left|1 - \left(\frac{\omega}{\omega_0}\right)^2\right|^2 + 4\varsigma^2\left(\frac{\omega}{\omega_0}\right)^2}$$

where $\omega 0$ [Hz] is the fundamental pulsation $\omega 0 = 2\pi f_0$; $f_0$ [Hz[ being the fundamental frequency of the system, $\varsigma$ [-] is the damping ratio and $k$ is a spring model like constant, and for multiple degrees of freedom, the mechanical admittance is taken equal to :

$$|H(\omega)|^2 = \sum_i |H_i(\omega)|^2 = \sum_i \frac{1}{k_i{}^2} \frac{1}{\left|1 - \left(\frac{\omega}{\omega_i}\right)^2\right|^2 + 4\varsigma_i{}^2 \left(\frac{\omega}{\omega_i}\right)^2}$$

as a sum of terms like the one above, each term being related to one mode of vibration, index i being the harmonics index ;

- the aerodynamic admittance is given by the empirical formula :

$$|\chi_a(\omega)|^2 = \frac{1}{1 + \left(\frac{p\omega}{V}\right)^{4/3}}$$

where p is a model parameter, V [m/s] is the mean wind speed and $\omega$ [Hz] is the pulsation ;
- the gust or wind component PSD is given by according to the Davenport model:

$$S_{wind}(\omega) = a \frac{n}{(1 + n^2)^{4/3}}$$

where $n$ is a reduced frequency given by $n = \frac{b}{V}\omega$ , V [m/s] being the mean wind speed and a and b are model parameters ;
- gust or wind speed is obtained from root mean square of acceleration $\sigma_{\ddot{x}}{}^2$:

$$V = \alpha \sigma_{\ddot{x}}{}^\beta$$

where $\alpha$ and $\beta$ are functional parameters related to $p_2$ and $n_2$ by $\alpha = \left(\frac{1}{p_2}\right)^{\frac{1}{n_2}}, \beta = \frac{2}{n_2}$ , and where for example $n_2$ is about 7/3 = 2.33 [-], the scale factor $\alpha$ being obtainable by an Aeolian vibration, preferably said Aeolian vibration being directly obtainable as readings of the sensing step according to claim 1.

A second aspect of the present invention relates to a method for estimating, measuring or monitoring a wind speed component acting on a suspended cable span of an overhead electrical power line, comprising the following steps :

- sensing a tension, vibration, strain or motion of said suspended cable span by using a local or distributed sensing device having access to local, respectively distributed, estimates of said tension, vibration, strain or motion, and :

   ◦ if said motion is not determined to comprise an Aeolian vibration, calculating, according to the buffeting theory model, a gust or wind speed component as described above ;

   ◦ if said motion is determined to comprise an Aeolian vibration, measuring a frequency of said Aeolian vibration and calculating the wind speed component as a function of said Aeolian vibration frequency.

A third aspect of the invention relates to a non-transitory computer-readable medium with instructions stored thereon, that when executed by a computer processor, performs the steps of the method, as described above, for estimating, measuring or monitoring a wind speed component acting on a suspended cable span of an overhead electrical power line through the response from the wind-induced excitation, or aerodynamic force, upon said suspended cable span, when the computer processor is on-board in the sensing device or remotely connected to the sensing device.
A fourth aspect of the invention relates to a system for estimating, measuring or monitoring a wind speed component acting on a suspended cable span of an overhead electrical power line through the response from the wind-induced excitation, or aerodynamic force, upon said suspended cable span, said system comprising :

- a sensing device attached on said suspended cable span, and comprising a local sensing device such as a strain gauge, an accelerometer, an IMU or combination of accelerometer and gyroscope, a load cell, an inclinometer or a laser doppler vibrometer, or a distributed sensing device, such as device carrying out Distributed Acoustic Sensing or DAS, Fiber Bragg Grating or FBG, Distributed Strain Sensing or DSS, Coherent Detection Optical Time Domain Reflectometer or C-OTDR, or Brillouin Optical Time Domain Analysis or BOTDA ;

- an on-board data processing unit or a data processing unit remotely connected to the sensing device ;

and configured to implement the following steps :

- sensing a tension, vibration, strain or motion of said suspended cable span by using a local or distributed sensing device having access to local, respectively distributed, estimates of said tension, vibration, strain or motion ;

- according to the buffeting theory model, calculating the root mean square, or RMS, $\sigma^2$ of the suspended cable span dynamic response corresponding to said estimated local or distributed tension, strain or motion, said root mean square being obtained from the integral of the power spectral density, or PSD, $S_R(\omega)$ of said dynamic response, said PSD being obtained by signal frequency analysis :

$$\sigma^2 = \int S_R(\omega) d\omega;$$

- and calculating the PSD of the gust or wind speed component, $S_{wind}(\omega)$, as a function of the PSD of said dynamic response, $S_R(\omega)$.

## Brief Description of the Drawings

Fig. 1 shows elements of response spectrum analysis. Response spectrum of the structure is related to the gust spectrum through aerodynamic and mechanical admittance.

Fig. 2 gives a numerical example of root mean square of response obtained from frequency domain integration of power spectral density and agreement with power fit. (Top) root mean square related to acceleration response and (Bottom) root mean square related to displacement response.

## Description of Preferred Embodiments of the Invention

While the invention is amenable to various modifications and alternative forms, specifics thereof have been shown by way of example in the drawings and will be described in detail. It should be understood, however, that the intention is no to limit aspects of the invention to the particular embodiments described. On the contrary, the intention is to cover all modifications, equivalents, and alternatives falling within the scope of the claims.
For the following defined terms, these definitions shall be applied, unless a different definition is given in the claims or elsewhere in this specification.
All numeric values are herein assumed to be preceded by the term "about", whether or not explicitly indicated. The term "about" generally refers to a range of numbers that one of skill in the art would consider equivalent to the recited value (i.e. having the same function or result). In many instances, the term "about" may be indicative as including numbers that are rounded to the nearest significant figure.
Any recitation of numerical ranges by endpoints includes all numbers within that range (e.g., 1 to 5 includes a.o. 1, 4/3, 1.5, 2, e, 2.75, 3, $\pi$, 3.80, 4, and 5).
Although some suitable dimension ranges and/or values pertaining to various components, features and/or specifications are disclosed, one of skill in the art, incited by the present disclosure, would understand desired dimensions, ranges and/or values may deviate from those expressly disclosed.
As used in this specification and the appended claims, the singular forms "a", "an", and "the" include plural referents unless the content clearly dictates otherwise. As used in this specification and the appended claims, the term "or" is generally employed in its sense including "and/or" unless the content clearly dictates otherwise.
The following detailed description should be read with reference to the drawings in which similar elements in different drawings are numbered the same. The detailed description and the drawings, which are not necessarily to scale, depict illustrative embodiments and are not intended to limit the scope of the invention. The illustrative embodiments depicted are intended only as exemplary. Selected features of any illustrative embodiment may be incorporated into an additional embodiment unless clearly stated to the contrary.
In a purpose of analysis and explanation, the computation and formulas are simplified by assuming the span as a one dimensional system and wind is assumed perpendicular to the suspended conductor (note that angle of attack effect is not taken into account). A distributed system could be modelled as well, considering a distribution of the one dimensional model over the structure / suspended conductor.

Assessment of conductor response due to wind is an important part of the overall prediction of wind loads on transmission structures. Winds is not only containing a mean component (i.e. static part) but also randomly fluctuating guts (i.e. dynamic part). These gusts cause fluctuating dynamic response of conductors. Buffeting theory is well known and well documented in the literature. From "Radhakrishna, Response of electrical transmission line conductors to extreme wind using field data, PhD thesis, Texas Tech University, 1988", one may detail the different steps to directly obtain wind speed from dynamic response of the structure thanks to buffeting theory. Conductor response to fluctuating wind depends upon the dynamic characteristics of the conductor as well as upon turbulence in the wind.

To measure tension, vibration, strain or motion induced by wind in a suspended cable span of an overhead power line, the sensing step will be performed with a measuring device consisting of a local sensing device such as a strain gauge, an accelerometer, an IMU or combination of accelerometer and gyroscope, a load cell, an inclinometer or a laser doppler vibrometer, or a distributed sensing device, such as Distributed Acoustic Sensing or DAS, Fiber Bragg Grating or FBG, Distributed Strain Sensing or DSS, Coherent Detection Optical Time Domain Reflectometer or C-OTDR, or Brillouin Optical Time Domain Analysis or BOTDA.

Local sensing devices (e.g., strain gauges, accelerometers, load cells) are perfect for point measurements and detecting wind-induced vibrations, strain, and motion at critical points, such as anchor points, mid-span sections, or attachment points to towers.

Distributed sensing systems (e.g., DAS, FBG, BOTDA) are best for long-distance, real-time monitoring, allowing the detection of wind-induced effects like vibration, strain, and tension changing continuously over the full length of the power line. These are especially useful for detecting wind-related phenomena across vast, remote spans.

The mean square response is the most useful measure for the amplitude or stress and strain design, and is found by integration of the power spectral density of the response over the frequency band. To determine the response of a conductor subject to fluctuating wind, frequency domain methods are usually used. Thanks to Frequency theory and using Parseval's theorem, one can compute the variance (i.e. the average power) of a process x by integrating the Power Spectral Density (PSD) over all frequencies:

$$\text{Var}(x) = \sigma(x)^2 = \int_{-\infty}^{\infty} S_{xx}(f)\,df$$

where x is the signal being analysed like the measured displacement in meters or acceleration in meters per square of second for example, $\sigma$ is the variance of the signal which has the same units as the signal x, $S_{xx}$ is the PSD of the signal obtained from frequency analysis like Fourier Transform with unit corresponding to the signal and Power Spectral density definition and $f$ is the frequency in Hertz ($\omega = 2\pi f$ is the pulsation in Hertz). The square root of the variance is the root mean square or standard deviation and it has the same dimension as the original signal. Power Spectral density of acceleration $S_{\ddot{x}\ddot{x}}(\omega)$, the acceleration being $\ddot{x}$, is related to PSD $S_{xx}(\omega)$ of displacement x through $S_{\ddot{x}\ddot{x}}(\omega) = \omega^4 S_{xx}(\omega)$.

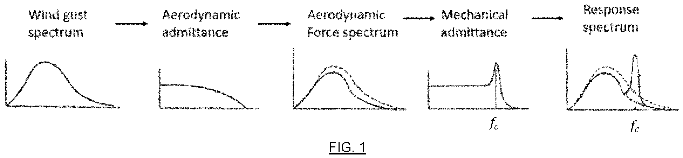

Conductor response to fluctuating wind depends on the dynamic characteristics of the span and conductor as well as the dynamic fluctuating content of the wind. Frequency domain methods are usually used to determine the response of a structure subjected to fluctuating wind. Figure 1 illustrates the several steps used to obtain power spectral density and mean square value of the structure/conductor response from the wind gust spectrum. As explained for example in ""Radhakrishna, Response of electrical transmission line conductors to extreme wind using field data, PhD thesis, Texas Tech University, 1988", firstly, the gust spectral density $S_{wind}(\omega)$ is transformed to the force spectral density $S_F(\omega)$ by multiplying the gust spectral density $S_{uu}(\omega)$ by the aerodynamic admittance function $\chi_a(\omega)$. The aerodynamic admittance function is defined as a transformation operator which transforms the spectral density of wind velocity into the spectral density of along-wind load (wind pressure on structure surface). The second step determines the response spectral density function $S_R(\omega)$ by multiplying the force spectral density $S_F(\omega)$ by the mechanical admittance function $H(\omega)$. The last step is related to the computation of the root means square value of the response $\sigma^2$ from the area under the response spectrum, i.e. using frequency integration of the power spectral density of the response $\sigma^2 = \int S_R(\omega)\,d\omega$. Mathematically speaking, one has the following :

$$S_R(\omega) = S_F(\omega)|H(\omega)|^2 \propto S_{wind}(\omega)|\chi_a(\omega)|^2|H(\omega)|^2$$

The root mean square of the displacement $\sigma_x{}^2$ and the root mean square of the acceleration $\sigma_{\ddot{x}}{}^2$ are respectively given by

$$\sigma_x{}^2 = \int S_R(\omega)\,d\omega$$

$$\sigma_{\ddot{x}}{}^2 = \int \omega^4 S_R(\omega)\, d\omega$$

Neglecting second order terms related to wind component fluctuation, the power spectral density of the fluctuating force $S_F(\omega)$ is related to power spectral density $S_{wind}(\omega)$ of the fluctuating wind and aerodynamic admittance function $\chi_a(\omega)$ thanks to a scaling factor:

$$S_F(\omega) = \frac{4F^2}{V^2} |\chi_a(\omega)|^2 S_{wind}(\omega)$$

where F is the mean force and given by $F = \frac{1}{2}\rho V^2 Cf A$, $\rho$ [kg/m^3] being the fluid density, this is air here, Cf [-] is the force coefficient, V [m/s] is the mean wind speed and A [m^2] is the area of exposure. The aerodynamic admittance function $|\chi_a(\omega)|^2$ is an adjustment factor that takes into account the fact that gust effects over the entire length of the structure/-conductor may not be correlated. It accounts for the correlation of gusts over the structure.

Mechanical admittance function $[H(\omega)]^2$ defines the motions that result from a force input. It is obtained from modal and frequency analysis of the structure/conductor using stiffness, mass and damping characteristics of the structure/suspended span. For a single degree of freedom system its form is

$$|H(\omega)|^2 = \frac{1}{k^2} \frac{1}{\left| 1 - \left(\frac{\omega}{\omega 0}\right)^2 \right|^2 + 4\varsigma^2 \left(\frac{\omega}{\omega 0}\right)^2}$$

where $\omega 0$ [Hz] is the fundamental pulsation ($\omega 0 = 2\pi f_0$; $f_0$ [Hz[ being the fundamental frequency) of the system, $\varsigma$ [-] is the damping ratio and k is a spring model like constant. For multiple degree of freedom system, the admittance function is modelled as a sum of terms like the aforementioned one, each term being related to one mode of vibrations, index i being the harmonics index.

$$|H(\omega)|^2 = \sum_i |H_i(\omega)|^2 = \sum_i \frac{1}{k_i{}^2} \frac{1}{\left| 1 - \left(\frac{\omega}{\omega_i}\right)^2 \right|^2 + 4\varsigma_i{}^2 \left(\frac{\omega}{\omega_i}\right)^2}$$

The mechanical admittance function is peaked at the fundamental frequency and higher harmonics of the structure. This term is related to resonant part of the excited frequency content.

The empirical formula commonly used for the aerodynamic admittance function is

$$|\chi_a(\omega)|^2 = \frac{1}{1 + \left(\frac{p\omega}{V}\right)^{4/3}}$$

where p is a model parameter, V [m/s] is the mean wind speed and $\omega$ [Hz] is the pulsation.

Different models for the power spectral density of wind turbulence exist. A commonly used is the one initially developed by Davenport. The general form of that model is given by

$$S_{wind}(\omega) = a \frac{n}{(1 + n^2)^{4/3}}$$

where n is a reduced frequency given by $n = \frac{b}{V}\omega$, V [m/s] being the mean wind speed and a and b are model parameters

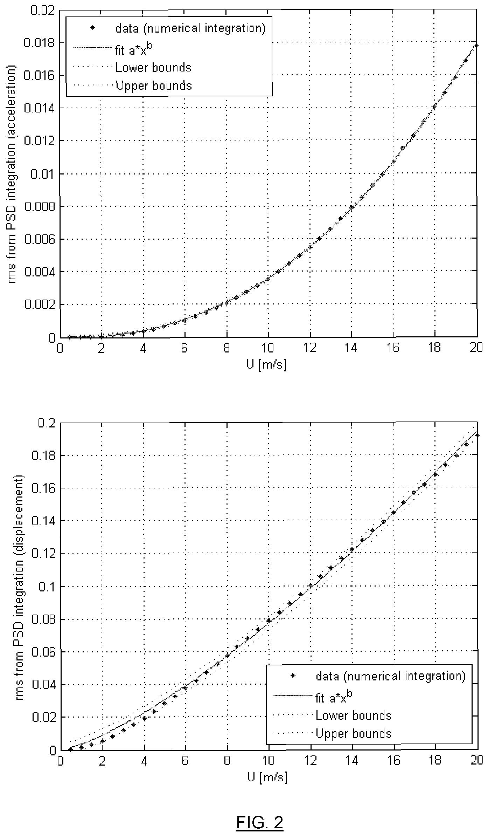

When developing the integration using the previous formulas, it can be shown that we have the following relationship. Numerical integration examples are given in Fig. 2.

$$\sigma_x{}^2 = \int S_R(\omega)\, d\omega \sim p_1 V^{n_1}$$

$$\sigma_{\ddot{x}}{}^2 = \int \omega^4 S_R(\omega)\, d\omega \sim p_2 V^{n_2}$$

where $p_1$, $n_1$, $p_2$, $n_2$ are computation related parameters.

Figure 2 is showing examples of numerical integration of the power spectral density of displacement $\sigma_x{}^2$ and acceleration $\sigma_{\ddot{x}}{}^2$. For those example one finds for example $n_2$ of about 7/3 = 2.33 [-]. It is obvious that different values can be found when using different models for spectral density spectrum of wind fluctuation, aerodynamic admittance and mechanical admittance with different selected parameters for those models.

Figure 2 gives a numerical example of root mean square of response obtained from frequency domain integration of power spectral density.

Agreement with power fit is given here below for

$$f(x) = ax^b$$

Coefficients (with 95% confidence bounds) :

- Root mean square related to acceleration response (n ~7/3 = 2.333) :

    a = 1.69e-05 (1.639e-05, 1.742e-05) ;
    b = 2.324 (2.314, 2.335).

- Root mean square related to displacement response
  (n - 4/3 = 1.333) :

    a = 0.003586 (0.00337, 0.003802) ;
    b = 1.332 (1.31, 1.354).

Values shown on Figure 2 are well correlated to found range when fitting experimental wind value and root mean square response as shown in aforementioned papers like "Etienne Cheynet et al., Wind-induced response of a bridge at the inlet of a fjord, Wind Engineering society, 11th Biennal Conference, 8-10 September 2014, Birmingham, United Kingdom" and "Fenerci et al., Measured Buffeting Response of a Long-Span Suspension Bridge Compared with Numerical Predictions Based on Design Wind Spectra, J. Struct. Eng., 2017, 143(9)".

Then wind speed may be obtained from root mean square response as for example

$$V = \alpha \sigma_{\ddot{x}}{}^\beta$$

1 where $\alpha$ and $\beta$ are functional parameters related to $p_2$ and $n_2$ by $\alpha = \left(\dfrac{1}{p_2}\right)^{\frac{1}{n_2}}$, $\beta = \dfrac{2}{n_2}$ .

Buffeting theory is applicable outside the range of vortex-induced resonance, also called Aeolian vibration. As explained in document WO 2014/090416 A1, it is well-known that the observed frequency of vibration of the overhead conductor is directly related to perpendicular wind component during so-called Aeolian vibration through Strouhal equation

$$Str = \frac{fd}{u}$$

where $f$ [Hz] is the frequency of vibration, $d$ [m] is the diameter of the conductor, $u$ [m/s] is the mean perpendicular component of the wind speed and $Str$ [-] is the dimensionless Strouhal number. Strouhal number is a function of the Reynolds number. However, commonly accepted Strouhal value range for overhead lines is [0.18-0.2]. Commonly default used value is 0.185 [-]. The perpendicular wind speed component $u$ may thus be calculated on the basis of vibration frequency analysis.

The parameter determining the relationship between the root mean square of the response and the average wind speed present a significant variability in response to various environmental conditions like the location, the surroundings of the suspended cable or span properties. In other words, in first approximation, this parameter value comes mainly from the power spectral density of wind turbulence and aerodynamic admittance. Those so-called Aeolian vibration may help determining the scale factor that links the root mean square of the response to the average wind speed. When Aeolian and buffeting types of vibration exist at the same time in transition period, i.e. when one type is appearing and the other one is disappearing, wind speeds obtained from both theories must be equal. On the one hand, when the motion of the suspended cable is dominated by Aeolian vibration, wind may be calculated using the Strouhal equation as $u = \dfrac{fd}{Str}$. On the other hand, when the motion of the suspended cable is dominated by buffeting rather than Aeolian vibrations, wind may be calculated using buffeting theory as $V = \upsilon = \alpha\sigma_{\ddot{x}}^{\beta}$ where coefficients may be estimated by equalizing both formulation for the wind using $\dfrac{fd}{Str} = \alpha\sigma_{\ddot{x}}^{\beta}$. Logarithm allows defining a linear relation for parameters and frequency of vibration and root mean square of the response as $\log\left(\dfrac{fd}{Str}\right) = log(\alpha) + \beta\log(\sigma_{\ddot{x}}) = p_1 + p_2\log(\sigma_{\ddot{x}})$, with $p_1 = log(\alpha)$ and $p_2 = \beta$. This formulation may be used for (re)calibrating buffeting based estimation of the wind speed using Aeolian based wind speed. These two methods complement each other to provide a gapless estimation of the perpendicular wind speed.

From document WO 2014/090416 A1, Aeolian vibration is identified through the frequency analysis of the response and when Aeolian vibration does not exist, wind is obtained from swing angle value obtained from mean values of the accelerometer readings that can be complex. In the present case, when Aeolian vibration does not exist, wind measurement is obtained through the root mean square of the dynamic response of the conductor that is related to mean wind speed..

Buffeting theory is used to determine response due to wind fluctuation. Response may be a displacement because displacement may influence the serviceability like too high movement of buildings (risk of failure through strain), overhead lines coming close to obstacles, etc. The response may be also defined as an acceleration because acceleration is directly measurable by accelerometer or strain, or a tension because strain may influence constraints and failure may appear. Tension is also related to strain / elongation through Hook's law $EA\varepsilon = H$ where F [N/m^2] is the Young modulus, $A$ [m^2] is the area, $\varepsilon$ [-] or [m/m] is the elongation and H [N] is the tension.

Estimating the root mean square (RMS) of a response like displacement, acceleration or strain of a structure due to wind fluctuation is a complex task because it is related to the power spectral density of the wind and correlation of that power spectral density over the length of the structure that is location-dependent, and is related to stiffness, damping, vibration characteristics of the structure. However, at some extend and approximation, buffeting theory clearly shows that there is a direct link of that root mean square of the response and the mean wind speed. The described method has shown it for acceleration. Strain or tension related development could be also obtained through finite element method and modal analysis, or as explicit formulation as detailed for example in "Wang et al., Analytical Model for Dynamic Tension in Overhead Power Transmission Lines Subject to Strong wind, reprinted from Advances in Structural Engineering, vol. 14, no. 3, 2011" : power density spectrum is directly related to power spectral density of wind fluctuations.

**Claims**

1. A method for estimating, measuring or monitoring a gust or wind speed component acting on a suspended cable span of an overhead electrical power line through the dynamic response from the wind-induced excitation, or aerodynamic force, upon said suspended cable span, comprising the following steps :

   - sensing a tension, vibration, strain or motion of said suspended cable span by using a local or distributed sensing device having access to local, respectively distributed, estimates of said tension, vibration, strain or motion ;
   - according to the buffeting theory model, calculating the root mean square, or RMS $\sigma^2$ of the suspended cable span dynamic response corresponding to said estimated local or distributed tension, vibration, strain or motion, said root mean square being obtained from the integral of the power spectral density, or PSD, $S_R(\omega)$ of said dynamic response, said RMS being obtained by signal frequency analysis :

$$\sigma^2 = \int S_R(\omega)d\omega;$$

   - and calculating the PSD of the gust or wind speed component, $S_{wind}(\omega)$, as a function of the PSD of said dynamic response, $S_R(\omega)$.

2. The method according to claim 1, wherein the sensing step is performed with a sensing device comprises a local sensing device such as a strain gauge, an accelerometer, an IMU or combination of accelerometer and gyroscope, a load cell, an inclinometer or a laser doppler vibrometer, or a distributed sensing device, such as a device carrying out Distributed Acoustic Sensing or DAS, Fiber Bragg Grating or FBG, Distributed Strain Sensing or DSS, Coherent Detection Optical Time Domain Reflectometer or C-OTDR, or Brillouin Optical Time Domain Analysis or BOTDA.

3. The method according to claim 1, wherein said response spectral density $S_R(\omega)$ is taken equal to the product of the fluctuating force spectral density $S_F(\omega)$) by the mechanical admittance function $|H(\omega)|^2$, or

$$S_R(\omega) = S_F(\omega)|H(\omega)|^2 \propto S_{wind}(\omega)|\chi_a(\omega)|^2|H(\omega)|^2,$$

where $S_{wind}(\omega)$ is the wind PSD and $|\chi_a(\omega)|^2$ is the aerodynamic admittance given in first approximation by $|\chi_a(\omega)|^2 = 1$.

4. The method according to claim 3, wherein the fluctuating force spectral density $S_F(\omega)$ is related to the wind PSD $S_{wind}(\omega)$ in first approximation by the formula :

$$S_F(\omega) = \frac{4F^2}{V^2} S_{wind}(\omega)$$

where F is the mean force given by $F = \frac{1}{2}\rho V^2 CfA$, $\rho$ [kg/m^3] being the fluid density, which is air density, Cf [-] is the force coefficient, V [m/s] is the mean wind speed and $A$ [m^2] is the area of exposure.

5. The method according to claim 4, wherein, for

one single degree of freedom, the mechanical admittance is taken equal to :

$$|H(\omega)|^2 = \frac{1}{k^2} \frac{1}{\left|1 - \left(\frac{\omega}{\omega_0}\right)^2\right|^2 + 4\varsigma^2\left(\frac{\omega}{\omega_0}\right)^2}$$

where $\omega 0$ [Hz] is the fundamental pulsation $\omega 0 = 2\pi f_0$, $f_0$ [Hz[ being the fundamental frequency of the system, $\varsigma$ [-] is the damping ratio and $k$ is a spring model like constant, and for multiple degrees of freedom, the mechanical admittance is taken equal to :

$$|H(\omega)|^2 = \sum_i |H_i(\omega)|^2 = \sum_i \frac{1}{k_i^2} \frac{1}{\left|1 - \left(\frac{\omega}{\omega_i}\right)^2\right|^2 + 4\varsigma_i^2\left(\frac{\omega}{\omega_i}\right)^2}$$

as a sum of terms like the one above, each term being related to one mode of vibration, index $i$ being the harmonics index.

6. The method according to claim 3, wherein the aerodynamic admittance is given by the empirical formula :

$$|\chi_a(\omega)|^2 = \frac{1}{1 + \left(\frac{p\omega}{V}\right)^{4/3}}$$

where p is a model parameter, V [m/s] is the mean wind speed and $\omega$ [Hz] is the pulsation.

7. The method according to claim 3, wherein the gust or wind component PSD is given according to the Davenport model, by :

$$S_{wind}(\omega) = a\frac{n}{(1+n^2)^{4/3}}$$

where $n$ is a reduced frequency given by $n = \frac{b}{V}\omega$ , $V$ [m/s] being the mean wind speed and a and b are model parameters.

8. The method according to claim 4, wherein gust or wind speed is obtained from root mean square of acceleration $\sigma_{\ddot{x}}{}^2$:

$$V = \alpha\sigma_{\ddot{x}}{}^\beta$$

1 where $\alpha$ and $\beta$ are functional parameters related to $p_2$ and $n_2$ by $\alpha = \left(\frac{1}{p_2}\right)^{\frac{1}{n_2}}$, $\beta = \frac{2}{n_2}$, and where for example $n_2$ is about 7/3 = 2.33 [-], the scale factor $\alpha$ being obtainable by an Aeolian vibration, preferably said Aeolian vibration being directly obtainable as readings of the sensing step according to claim 1.

9. A method for estimating, measuring or monitoring a wind speed component acting on a suspended cable span of an overhead electrical power line, comprising the following steps :

   - sensing a tension, vibration, strain or motion of said suspended cable span by using a local or distributed sensing device having access to local, respectively distributed, estimates of said tension, vibration, strain or motion, and :
   - if said motion is not determined to comprise an Aeolian vibration, calculating, according to the buffeting theory model, a gust or wind speed component according to anyone of claims 1 to 8 ; or
   - if said motion is determined to comprise an Aeolian vibration, measuring a frequency of said Aeolian vibration and calculating the wind speed component as a function of said Aeolian vibration frequency.

10. A non-transitory computer-readable medium with instructions stored thereon, that when executed by a computer processor, performs the steps of the method, according to anyone of claims 1 to 9, for estimating, measuring or monitoring a wind speed component acting on a suspended cable span of an overhead electrical power line through the response from the wind-induced excitation, or aerodynamic force, upon said suspended cable span, when the computer processor is on-board in the sensing device or remotely connected to the sensing device.

11. A system for estimating, measuring or monitoring a wind speed component acting on a suspended cable span of an overhead electrical power line through the response from the wind-induced excitation, or aerodynamic force, upon said suspended cable span, said system comprising :

   - a sensing device attached on said suspended cable span, and comprising a local sensing device such as a strain gauge, an accelerometer, an IMU or combination of accelerometer and gyroscope, a load cell, an inclinometer or a laser doppler vibrometer, or a distributed sensing device, such as device carrying out Distributed Acoustic Sensing or DAS, Fiber Bragg Grating or FBG, Distributed Strain Sensing or DSS, Coherent Detection Optical Time Domain Reflectometer or C-OTDR, or Brillouin Optical Time Domain Analysis or BOTDA ;
   - an on-board data processing unit or a data processing unit remotely connected to the sensing device ;

   and configured to implement the following steps :

   - sensing a tension, vibration, strain or motion of said suspended cable span by using a local or distributed sensing device having access to local, respectively distributed, estimates of said tension, vibration, strain or motion ;
   - according to the buffeting theory model, calculating the root mean square, or RMS, $\sigma^2$ of the suspended cable span dynamic response corresponding to said estimated local or distributed tension, strain or motion, said root mean square being obtained from the integral of the power spectral density, or PSD, $S_R(\omega)$ of said dynamic response, said PSD being obtained by signal frequency analysis :

$$\sigma^2 = \int S_R(\omega)d\omega;$$

   - and calculating the PSD of the gust or wind speed component, $S_{wind}(\omega)$, as a function of the PSD of said dynamic

response, $S_R(\omega)$.

Wind gust spectrum → Aerodynamic admittance → Aerodynamic Force spectrum → Mechanical admittance → Response spectrum

FIG. 1

FIG. 2

Europäisches
Patentamt
European
Patent Office
Office européen
des brevets

**EUROPEAN SEARCH REPORT**

**Application Number**

EP 24 21 9507

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/163884 A1 (LILIEN JEAN-LOUIS [BE] ET AL) 12 June 2014 (2014-06-12) | 9,10 | INV.<br>H02G1/02 |
| A | * paragraphs [0001], [0016], [0024] – [0027], [0036], [0044] * | 1-8,11 | |
| A | PETERSEN ØYVIND WIIG ET AL: "The use of inverse methods for response estimation of long-span suspension bridges with uncertain wind loading conditions", JOURNAL OF CIVIL STRUCTURAL HEALTH MONITORING, SPRINGER BERLIN HEIDELBERG, BERLIN/HEIDELBERG, vol. 9, no. 1, 13 December 2018 (2018-12-13), pages 21-36, XP036689969, ISSN: 2190-5452, DOI: 10.1007/S13349-018-0319-Y [retrieved on 2018-12-13] * the whole document * | 1-11 | |

TECHNICAL FIELDS
SEARCHED (IPC)

H02G

The present search report has been drawn up for all claims

| Place of search | Date of completion of the search | Examiner |
|---|---|---|
| Munich | 16 May 2025 | Schwarz, Cornelia |

EPO FORM 1503 03.82 (P04C01)

## ANNEX TO THE EUROPEAN SEARCH REPORT
## ON EUROPEAN PATENT APPLICATION NO.

EP 24 21 9507

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2025

| Patent document cited in search report | Publication date | Patent family member(s) | | Publication date |
|---|---|---|---|---|
| US 2014163884 A1 | 12-06-2014 | CN | 104981699 A | 14-10-2015 |
| | | EP | 2929357 A1 | 14-10-2015 |
| | | US | 2014163884 A1 | 12-06-2014 |
| | | US | 2015268379 A1 | 24-09-2015 |
| | | WO | 2014090416 A1 | 19-06-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014090416 A1
- WO 2016102443 A1
- US 5140257 A
- US 5341088 A
- US 6441603 B
- US 5559430 A
- WO 2010054072 A1

- WO 2004038891 A2
- NO 20024833
- US 20120029871 A1
- WO 2014090416 A
- US 8184015 B2
- WO 2021207093 A1
- WO 2023238348 A1

**Non-patent literature cited in the description**

- IEEE standard 2006. Cigre, 2006
- Guide for application of direct real-time monitoring systems. CIGRE Technical brochure No. 498. Study Committee B2, 2012
- **L. BJERKAN et al.** Measurements on an Aeolian vibrations on a 3 Km fjord crossing with fibre-optic bragg grating sensors. *CIGRE 2004*, B2-314
- **LEIF BJERKAN**. Application of fibre optic Bragg grating sensors, monitoring environmental loads of overhead power transmission lines. *Applied Optics*, February 2000, vol. 39 (4), 554-560
- **CANUDO J.** ; **SEVILLANO P.** Overhead Transmission Line Sag Monitoring Using a Chirped-Pulse Phase-Sensitive OTDR. *IEEE Sensors Journal*, 2023, vol. 24 (2), 1988-1995
- **HIMANSHI SINGH et al.** Extended Characterization of an Optical Sag Sensor for High-Temperature Low-Sag Lines. *IEEE Sensors Letters*, 2023, vol. 7 (9), 1-4
- **GRZEGORZ FUSIEK et al.** Design of an optical sensor with varied sensitivities for overhead line sag, temperature and vibration monitoring. *2022 IEEE International Instrumentation and Measurement Technology Conference (I2MTC), Ottawa, ON, Canada*, 16 May 2022
- **SKROVANEK D. et al.** Application of fibre-optics to FERC Order 881 on ambient-adjusted ratings (AAR) and dynamic line ratings (DLR). *2024 IEEE PES T&D Conference, Anaheim, CA*
- **CHADI SAYDE et al.** High-resolution wind speed measurements using actively heated fibre optics. *Geophysical Research Letters*, 2015, vol. 42 (22), 10064-10073
- **VAN RAMSHORST et al.** Wind speed measurements using distributed fibre optics: a wind tunnel study. *Atmospheric Measurement Techniques Discussions*, 2019, 1-21

- **FREUNDORFER A. et al.** Distributed sensing of wind direction using fibre-optic cables. *Journal of Atmospheric and Oceanic Technology*, 2021, vol. 38 (10), 1871-1883
- **GUANHUA ZHI** ; **HAITING DI**. Wind speed monitoring system based on optical fibre curvature sensor. *Optic Fiber Technology*, 2021, vol. 62 (6), 102467
- **ETIENNE CHEYNET et al.** Wind-induced response of a bridge at the inlet of a fjord. *Wind Engineering society, 11th Biennal Conference*, 08 November 2014
- **FENERCI et al.** Measured Buffeting Response of a Long-Span Suspension Bridge Compared with Numerical Predictions Based on Design Wind Spectra. *J. Struct. Eng.*, 2017, vol. 143 (9)
- **SEHOON KIM et al.** In-Situ Data-Driven Buffeting Response Analysis of a Cable-Stayed Bridge. *Sensors*, 2019, vol. 19, 3048
- Extensive analyses on large amplitude gusty-wind induced vibrations of overhead transmission lines systems. **HUNG et al.** Research Report of Department of Civil and Environmental Engineering. Saitama Univ., 2014, vol. 40
- Aeroleslastic wind tunnel testing on the wind-induced dynamic reaction response of transmission lines,. *J. Aerosp. Eng.*, 2021, vol. 34 (1), 04020105
- **DAHAI WANG et al.** Analytical Model for Dynamic Tension in Overhead Power Transmission Lines Subject to Strong Wind. *Advances in Structural Engineering*, 2011, vol. 14 (3)
- Response of electrical transmission line conductors to extreme wind using field data. **RADHAKRISHNA**. PhD thesis. Texas Tech University, 1988

- **ETIENNE CHEYNET et al.** Wind-induced response of a bridge at the inlet of a fjord. *Wind Engineering society, 11th Biennal Conference*, 08 September 2014

- **WANG et al.** Analytical Model for Dynamic Tension in Overhead Power Transmission Lines Subject to Strong wind. *Advances in Structural Engineering*, 2011, vol. 14 (3)